# EUROPÄISCHE PATENTSCHRIFT

(11) **EP 3 495 130 B1**
(45) Veröffentlichungstag und Bekanntmachung des Hinweises auf die Patenterteilung: **05.01.2022**
(21) Anmeldenummer: 18196138.4
(22) Anmeldetag: 24.09.2018
(51) Int. Cl.: B29D 30/30, B29D 30/26

(54) **VERFAHREN ZUM AUFWICKELN EINES ZUR HERSTELLUNG EINES GÜRTELS EINES FAHRZEUGLUFTREIFENS GEEIGNETEN GÜRTELAUFBAUSTREIFENS AUF EINE GÜRTELAUFBAUTROMMEL UND EINE ENTSPRECHENDE VORRICHTUNG**
METHOD FOR WINDING A BELT CONSTRUCTION STRIP FOR FORMING A BELT OF A PNEUMATIC TYRE FOR A VEHICLE ON A BELT CONSTRUCTION DRUM AND A CORRESPONDING DEVICE
PROCÉDÉ D'ENROULEMENT D'UNE CEINTURE APPROPRIÉE À LA FABRICATION D'UNE BANDE DE STRUCTURE D'UNE CEINTURE DE PNEUMATIQUE DE VÉHICULE À UN TAMBOUR DE STRUCTURE DE CEINTURE ET DISPOSITIF CORRESPONDANT

(30) Priorität: 11.12.2017 DE 102017222371
(43) Veröffentlichungstag der Anmeldung: 12.06.2019
(73) Patentinhaber: Continental Reifen Deutschland GmbH, 30165 Hannover (DE)
(72) Erfinder: Linne, Stefan, 30900 Wedemark (DE); Schischke, Henrik, 31535 Neustadt (DE)
(74) Vertreter: Continental Corporation

(56) Entgegenhaltungen:
- EP-A1- 2 965 895
- WO-A1-2007/118688
- WO-A1-2008/012126
- DE-A1- 19 938 151
- DE-A1-102008 021 042
- DE-A1-102014 015 490
- JP-A- 2010 260 178

## Beschreibung

Die Erfindung betrifft ein Verfahren zum Aufwickeln eines zur Herstellung eines Gürtels eines Fahrzeugluftreifens geeigneten Gürtelaufbaustreifens auf eine Gürtelaufbautrommel. Die Erfindung betrifft auch eine Vorrichtung zum Aufwickeln eines zur Herstellung eines Gürtels eines Fahrzeugluftreifens geeigneten Gürtelaufbaustreifens auf eine nachgeordnete Gürtelaufbautrommel.

Bei der Herstellung eines Reifen wird zuerst ein Endlos-Streifen hergestellt. Der Endlos-Streifen umfasst dabei verschiedene Streifenkomponenten, wie z.B. den Gürtel, die Karkasse und die Innenschicht.

Der Endlos-Streifen wird dann in Aufbaustreifen mit einer passenden Größe geschnitten. Der Aufbaustreifen mit einem Gürtel wird Gürtelaufbaustreifen genannt.

Im folgenden Herstellungsschritt muss der Gürtelaufbaustreifen dann auf eine Gürtelaufbautrommel aufgelegt werden. Nach dem Auflegen des Gürtelaufbaustreifens auf die Gürtelaufbautrommel muss der Gürtelaufbaustreifen auf der Gürtelaufbautrommel nicht nur selbst eine möglichst gleichförmige Form, insbesondere gleichförmige Kanten, aufweisen, sondern muss auch möglichst präzise auf der Gürtelaufbautrommel aufliegen.

Bei dem präzisen Aufliegen auf der Gürtelaufbautrommel ist es insbesondere wichtig, dass die jeweils gegenüberliegenden Seitenkanten des Gürtelaufbaustreifens nicht nur parallel sind, sondern auch möglichst gradlinig um die Gürtelaufbautrommel herumlaufen.

Schwankungen in der Dicke des Gürtelaufbaustreifens sowie Abweichungen von der Gradlinigkeit oder Parallelität der beiden Seitenkanten des Gürtelaufbaustreifens auf der Gürtelaufbautrommel dazu führen, dass der hergestellte Reifen eine verkürzte Lebensdauer aufweist oder erst gar nicht verwendet werden kann. Bei den besagten Abweichungen handelt es sich meistens um Abweichungen im Millimeterbereich oder darunter. Häufig werden mehrere Gürtelaufbaustreifen übereinander auf ein- und dieselbe Gürtelaufbautrommel aufgelegt. Beim Auflegen des zweiten Gürtelaufbaustreifens auf einen darunter liegenden Gürtelaufbaustreifen müssen nicht nur die vorstehenden Abweichungen beachtet werden, sondern insbesondere auch, dass die beiden Gürtelstreifen möglichst genau übereinander aufgelegt werden. Das Auflegen soll insbesondere die vorstehende Präzision erreichen, ohne dabei den Herstellungsprozess zu verlangsamen.

Im Stand der Technik sind verschiedene Verfahren zum Aufwickeln auf eine Gürtelaufbautrommel bekannt:
DE 19641509 C2 betrifft ein "Verfahren zum Transport eines Gürtelaufbaustreifens für den Aufbau eines Gürtels für einen Fahrzeugluftreifen mit parallelen schräg zur Förderrichtung verlaufenden angeordneten in Kautschuk eingebetteten Festigkeitsträgern [...] zu einer nachgeordneten Weiterverarbeitungseinrichtung und zum Aufbereiten des Gürtelaufbaustreifens zur Weiterverarbeitung in der nachgeordneten Weiterverarbeitungseinrichtung" (siehe Anspruch 1).
DE 3151395 A1 offenbart "eine Zentriervorrichtung zum kontinuierlichen Zentrieren eines reifenförmigen Gutes auf einer Rollenbahn [...], wobei die Stützrollen bezüglich dieser Mittellinien der Rollenbahn geneigt sind und Führungsrollen nur auf einer Seite der Rollenbahn angeordnet sind, und wobei eine Abtastvorrichtung auf der anderen Seite der Rollenbahn die gegenüberliegende Kante des Streifens abtastet, wobei Verschiebemittel sowohl mit der Abtasteinrichtung als auch mit den Führungsrollen gekoppelt sind, um beide kontinuierlich derart zu verschieben, dass die Abtasteinrichtung und die Führungsrollen im gleichen Abstand zur Mittellinie der Rollenbahn bleiben" (siehe Zusammenfassung).
DE 6981493 T2 offenbart ein "Verfahren zum Befördern einer länglichen Streifenkomponente und Zentrieren der Streifenkomponente, mit dem Schritt des Beförderns der Komponente an einem ersten Band eines ersten Bandförderers mit einem Eintrittsende und einem Austrittsende.

Dokument DE 199 381 51 A1 offenbart eine Zubringereinrichtung, welche einen Speicher umfasst und bei der "durch eine einfache Hubbewegung der Zuführungs- und Schneideinrichtung das einteilige Fördersystem in seiner rückwärtigen Schneid- und Aufgabeposition abwechselnd jeweils mit der oberen Zuführungs- und Schneideinrichtung oder der unteren Zuführungs - und Schneideinrichtung in Wirkverbindung treten kann". Zudem ist in diesem Dokument [. .], welche als einteiliges Fördersystem ausgebildet sind und in welchen die Fördereinrichtung zum Abzug des Reifenbauteiles auf den Speicher und zur Positionierung des Reifenbauteiles in bzw. unter der Zuführungs- und Schneideinrichtung 33-36" gezeigt.

Dokument WO 2008/012126 A1 offenbart "die Ausrichtung von Materialbahnen mit Sensoreinrichtungen zum Erfassen der Positionen der Endabschnitte und der Seitenkanten der Materialbahnstücke" .

Dokument WO 2007/118688 A1 offenbart einen trommelseitigen Sensor, der "die Lage aller Materialstreifen auf der Trommel nacheinander [erfasst], unabhängig davon, von welchem Förderer diese der Trommel zugeführt wurden" .

Der Sensor steht mit einem Multiplexer in Wirkverbindung, um die gewonnenen Signale jeweils jenen Speichermitteln und deren Förderer zuzuordnen, der zuletzt seinen Materialstreifen zur Trommel gefördert hat.

Dokument EP 2965 895 A1 offenbart ein Reifenaufbauverfahren, bei dem Kautschukstreifen zwischen einem ersten und einem zweiten Förderband zentriert wird und anschließend nach dem zweiten Förderband auf eine Aufbautrommel aufgewickelt wird.

Das Dokument mit der "Application Number" US 114 987 offenbart eine Vorrichtung zum Fixieren eines Reifenkomponentenbauteils mit Corden auf einer Aufbautrommel, wobei die Corde in dem Reifenkomponentenaufbauteil in einem vorbestimmten Winkel eingefügt sind und die gegenüberliegenden Enden entsprechend in paralleler Richtung zu dem besagten Corden in eine bestimmte Länge geschnitten sind.

Dokument WO 2012/139556 A1 offenbart ein "Verfahren zur Ausrichtung eines Gürtelaufbaustreifens, der ein Mittelteil sowie dreieckartige Endstücke aufweist und derart auf eine Reifenaufbautrommel aufgewickelt wird, dass sich die dreieckförmigen Endbereiche mindestens bereichsweise nebeneinander erstrecken" .

Dokument WO 2015/069102 A1 offenbart ein Verfahren zum Zentrieren eine Reifenkomponente [...] mit dem Gebrauch einer Zentrierungseinrichtung, wobei die Reifenkomponente ein führendes Ende, ein nachlaufendes Ende und einen Hauptteil zwischen dem führenden und dem nachlaufenden Ende umfasst, wobei die Reifenkomponente eine erste longitudinale Kante und eine zweite longitudinale Kante zumindest entlang des Hauptteils aufweist, wobei die Zentrierungseinrichtung ein erstes Förderband, ein zweites Förderband und eine Trommel umfasst .

Eine Aufgabe, die der Erfindung zugrunde liegt, besteht darin, ein im Vergleich zum Stand der Technik verbessertes Verfahren bereitzustellen, womit Gürtelaufbaustreifen präziser auf eine Gürtelaufbautrommel aufgelegt werden können.

Gelöst wird diese Aufgabe erfindungsgemäß durch ein Verfahren zum Aufwickeln eines zur Herstellung eines Gürtels eines Fahrzeugluftreifens geeigneten Gürtelaufbaustreifens auf eine Gürtelaufbautrommel nach Anspruch 1, umfassend die folgenden Schritte:
a. Bereitstellen oder Herstellen eines ersten Gürtelaufbaustreifens,
b. Befördern des in Schritt a. bereitgestellten oder hergestellten ersten Gürtelaufbaustreifens
   - über ein erstes Fördermittel des einen Fördermittels
      oder
   - über ein erstes Fördermittel der zwei, drei, vier oder mehr als vier Fördermittel,
c. Ausrichten des auf dem ersten Fördermittel beförderten ersten Gürtelaufbaustreifens gegenüber einer in Förderrichtung nachgeordneten Gürtelaufbautrommel mittels Verschieben des ersten Fördermittels in einer zur Förderrichtung des ersten Fördermittels unterschiedlichen ersten Verschiebungsrichtung und Aufwickeln des ersten Gürtelaufbaustreifens auf die in Förderrichtung nachgeordnete Gürtelaufbautrommel.

Durch das Verschieben des ersten Fördermittels konnten die aus dem Stand der Technik bekannten Nachteile überwunden werden, wobei das erste Fördermittel das Fördermittel ist, welches sich im Herstellungsprozess des Gürtels bevorzugt unmittelbar vor der Gürtelaufbautrommel befindet, d.h., dass sich zwischen Gürtelaufbautrommel und dem ersten Fördermittel bevorzugt kein weiteres Fördermittel befindet.
Einerseits kann durch das Verschieben des ersten Fördermittels in die erste Verschiebungsrichtung der erste Gürtelaufbaustreifen gegenüber der Gürtelaufbautrommel ausgerichtet werden. Andererseits ermöglicht das Verschieben des ersten Fördermittels zudem, dass kein zusätzliches Fördermittel zum Ausrichten des Gürtelaufbaustreifens gegenüber eines weiteren Fördermittels vorhanden sein muss (vgl. DE 19641509 C2) oder gar die häufig bis zu 3000 kg schwere Gürtelaufbautrommel samt Gürtelmaschine bewegt werden muss (vgl. WO 2015/069102 A1), um den Gürtelaufbaustreifen beim Aufwickeln auf die Gürtelaufbautrommel auszurichten. Dies ermöglicht ein Platz sparenderes, schnelleres und präziseres Aufwickeln des Gürtelaufbaustreifens.

Im Rahmen der vorliegenden Erfindung bedeutet der Ausdruck "Verschieben des ersten Fördermittels in einer ersten Verschiebungsrichtung" bevorzugt, dass das erste Fördermittel sowohl in die erste Verschiebungsrichtung als auch entgegen die erste Verschiebungsrichtung verschoben werden kann. Bevorzugt ist daher, dass das Ausrichten in Schritt c. mittels Verschieben des ersten Fördermittels parallel zu einer zur Förderrichtung des ersten Fördermittels unterschiedlichen ersten Verschiebungsrichtung. Dies gilt auch für das Verschieben des zweiten Fördermittels als auch des ersten und zweiten Förderbandes.

Durch das Verschieben des ersten Fördermittels in eine zur Förderrichtung des ersten Fördermittels unterschiedliche erste Verschiebungsrichtung ist es zudem möglich, durch Installation zum ersten Fördermittel gleichartige Fördermittel, den Gürtelaufbauprozess weiter zu beschleunigen. Aufgrund des Verschiebens wäre es beispielsweise möglich, mehrere Fördermittel unmittelbar vor der Gürtelaufbautrommel anzubringen, welche abwechselnd beladen, abgebildet, ausgerichtet oder aufgewickelt werden (siehe nachstehend beschriebene Ausführungsform).
In so einem nachstehend beschriebenen und erfindungsgemäßen Verfahren würde das Beladen des Fördermittels mit dem vorstehend beschriebenen Schritt b. gleichgesetzt sein, und das Ausrichten oder Aufwickeln des vorstehend beschriebenen Schritts c.. Bei dem vorstehend beschriebenen erfindungsgemäßen Verfahren mit mehreren Förderbändern entspräche der Schritt des Abbildens dem Abbilden der Kanten des Gürtelaufbaustreifens durch geeignete Abbildungsmittel wie Kameras oder 2-D-Scanner.
Aufgrund der vorstehend und nachstehend beschriebenen Verwendung mehrerer Transportmittel, welche sich unmittelbar vor der Gürtelaufbautrommel befinden, ist es somit möglich, den Arbeitsablauf in eine noch größere Anzahl an parallel ablaufenden Prozessschritten zu gliedern. Das in einem erfindungsgemäßen Verfahren vorgesehene Verschieben des ersten Fördermittels in eine erste Verschiebungsrichtung ermöglicht somit nicht nur eine höhere Präzision, sondern ermöglicht auch ein zeiteffizienteres Verfahren. Ein weiterer Vorteil eines erfindungsgemäßen Verfahrens ist, dass dadurch, dass keine Gürtelaufbautrommel beim Ausrichten bewegt werden muss, auch mehrere Gürtelaufbautrommeln auf einfache Art und Weise, wie nachstehend für eine Zweitrommelvorrichtung beschrieben, installiert werden können.

Bevorzugt ist ein Verfahren wie vorstehend beschrieben oder wie vorstehend als bevorzugt beschrieben, wobei die in Förderrichtung des ersten Fördermittels nachgeordnete Gürtelaufbautrommel eine erste Gürtelaufbautrommel einer Zweitrommelvorrichtung ist, wobei die Zweitrommelvorrichtung eine zweite Gürtelaufbautrommel und optional weitere Gürtelaufbautrommeln umfasst. Besonders bevorzugt können die erste, zweite und weitere Gürtelaufbautrommel so verstellt werden, dass sie ihre Positionen zyklisch tauschen. Auch dies ermöglicht es, den Arbeitsablauf in eine noch größere Anzahl an parallel ablaufenden Prozessschritten zu gliedern

Erfindungsgemäß wird beim Verfahren das Ausrichten und das Aufwickeln in Schritt c. gleichzeitig durchgeführt wird. Dies ermöglicht einen noch zeiteffizienteren Aufbau auf einer Gürtelaufbautrommel.

Bevorzugt ist ein Verfahren wie vorstehend beschrieben oder wie vorstehend als bevorzugt beschrieben, wobei die erste Verschiebungsrichtung relativ zur Förderrichtung des ersten Förderbandes
- schräg , bevorzugt in einem Winkel von 10° bis 45°, besonders bevorzugt 20° bis 34°,
   oder
- rechtwinklig (d.h. parallel zur Drehachse der Gürtelaufbautrommel)
   ist. Dies gilt *vice versa* für die Verschiebungsrichtungen eines zweiten, dritten, vierten und weiterer Fördermittels

Das Verschieben des ersten Fördermittels wird bevorzugt auf Profilschienen oder mittels einer im Allgemeinen bekannten Linearführung durchgeführt, wobei das Verschieben des ersten Fördermittels durch einen Motor mit Kugelrollspindel ermöglicht wird.

Profilschienen oder andere allgemein bekannte Linearführungen ermöglichen in Verbindung mit einem Motor mit Kugelrollspindel als Antrieb eine besonders präzise als auch eine besonders schnelle Aufwicklung des Gürtelaufbaustreifens auf die Gürtelaufbautrommel.

Besonders bevorzugt kann das erste Fördermittel wie vorstehend beschrieben parallel zur Drehachse der Gürtelaufbautrommel
und zusätzlich
in die Förderrichtung des ersten Fördermittels als auch diametral entgegen die Förderrichtung des ersten Fördermittels verschoben werden. Diese zur Förderrichtung des ersten Fördermittels rechtwinklige Verschiebung wird bevorzugt mit einem Stellmotor durchgeführt, bevorzugt mit einem elektrischen Motor.

Besonders bevorzugt ist ein Verfahren wie vorstehend beschrieben oder wie vorstehend als bevorzugt beschrieben, wobei die erste Verschiebungsrichtung des ersten Fördermittels schräg zur Förderrichtung des ersten Fördermittels ist, bevorzugt so wie vorstehend als bevorzugt beschrieben. Der Vorteil dieses Aspekts der vorliegenden Erfindung ist, dass das Ausrichten schneller als bei einer vorstehend beschriebenen rechtwinkligen ersten Verschiebungsrichtung erfolgen kann.

Ganz besonders bevorzugt ist ein Verfahren wie vorstehend als bevorzugt beschrieben oder wie vorstehend als besonders bevorzugt beschrieben, wobei die Fördergeschwindigkeit des ersten Fördermittels und das Verschieben des ersten Fördermittels in die erste Verschiebungsrichtung so gesteuert oder geregelt werden, dass der Gürtelaufbaustreifen beim Aufwickeln auf die Gürtelaufbautrommel gedehnt oder gestaucht werden kann. Dies hat den Vorteil, dass nicht nur Abweichungen in den Seitenkanten, sondern auch Abweichungen in der Länge des Aufbaustreifens oder an hinteren oder vorderen Streifenspitze ausgeglichen werden können.

Bevorzugt ist auch ein Verfahren wie vorstehend beschrieben oder wie vorstehend als bevorzugt beschrieben, wobei, wie insbesondere nachstehend beschrieben, ein erstes und ein zweites Fördermittel unmittelbar vor der Gürtelaufbautrommel angebracht sind, wobei ein mit einem solchen erfindungsgemäßen Verfahren hergestellte Gürtel sich insbesondere zur Herstellung eines Gürtels eines LKW-Luftreifens eignet.

Bevorzugt ist auch ein Verfahren wie vorstehend beschrieben oder wie vorstehend als bevorzugt beschrieben, wobei der Gürtelaufbaustreifen in Schritt b. über das erste Fördermittel des genau einen Fördermittels befördert wird, wobei sich der gemäß solch eines erfindungsgemäßen Verfahrens aufgewickelte Gürtelaufbaustreifen zur Herstellung eines Gürtels eines Spezialfahrzeugluftreifens eignet.

Im Rahmen der vorliegenden Erfindung ist eine Zweitrommelvorrichtung, welche mindestens eine erste und eine zweite Gürtelaufbautrommel umfasst und die erste oder zweite Gürtelaufbautrommel nicht parallel zur Drehachse der ersten oder zweiten Gürtelaufbautrommel verschoben werden kann. Bevorzugt ist die Zweitrommelvorrichtung dabei so eingerichtet, dass die mindestens Zweigürtelaufbautrommel durch eine Drehbewegung der Zweitrommelvorrichtung die erste Gürtelaufbautrommel in die Position der zweiten Gürtelaufbautrommel und dabei gleichzeitig die zweite Gürtelaufbautrommel in die Position der ersten Gürtelaufbautrommel überführt werden kann. Dies ermöglicht, dass während des Aufwickelns eines Gürtelaufbaustreifens auf die erste oder zweite Gürtelaufbautrommel die jeweils andere Gürtelaufbautrommel bereits in einem weiteren Prozessschritt durchführen kann.

Bevorzugt ist ein Verfahren wie vorstehend beschrieben oder wie vorstehend als bevorzugt beschrieben, wobei das Verfahren die folgenden Schritte umfasst:
a. Bereitstellen oder Herstellen eines ersten und eines zweiten Gürtelaufbaustreifens,
b. Befördern des in Schritt a. bereitgestellten oder hergestellten ersten Gürtelaufbaustreifens über ein erstes Fördermittel mindestens zweier Fördermittel und des in Schritt a. bereitgestellten oder hergestellten zweiten Gürtelaufbaustreifens über ein zweites Fördermittel der mindestens zwei Fördermittel,
c.1 Ausrichten des auf dem ersten Fördermittel beförderten ersten Gürtelaufbaustreifens gegenüber einer in Förderrichtung nachgeordneten Gürtelaufbautrommel mittels Verschieben des ersten Fördermittels in einer zur Förderrichtung des ersten Fördermittels unterschiedlichen erste Verschiebungsrichtung und gleichzeitiges Aufwickeln des ersten Gürtelaufbaustreifens auf die in Förderrichtung des ersten Fördermittels nachgeordnete Gürtelaufbautrommel,
   und
c.2 Ausrichten des auf dem zweiten Fördermittel beförderten zweiten Gürtelaufbaustreifens gegenüber einer in Förderrichtung nachgeordneten Gürtelaufbautrommel mittels Verschieben des zweiten Fördermittels in einer zur Förderrichtung des zweiten Fördermittels unterschiedlichen zweiten Verschiebungsrichtung und gleichzeitiges Aufwickeln des zweiten Gürtelaufbaustreifens auf die in Förderrichtung des zweiten Fördermittels nachgeordnete Gürtelaufbautrommel,
wobei bevorzugt das erste und das zweites Fördermittel in einer Ebene nebeneinander angeordnet sind.

Ein Vorteil des vorstehend beschriebenen Aspekts der Erfindung ist, dass durch die Verwendung von zwei Fördermitteln das Aufwickeln auf die Gürtelaufbautrommel im Vergleich zur Verwendung eines Fördermittels schneller erfolgen kann, da die vorstehend beschriebenen Schritte des Beladens, das Abbilden, des Ausrichtens und Aufwickeln zeiteffizienter durchgeführt werden können.
Im Rahmen der vorliegenden Erfindung bedeutet der Ausdruck "in einer Ebene nebeneinander angeordnet" bevorzugt, dass die in Förderrichtung laufende Förderbandoberfläche des ersten Förderbandes oder -mittels planparallel zu der in Förderrichtung laufende Förderbandoberfläche des zweiten Förderbandes oder -mittels ist.

Besonders bevorzugt ist ein Verfahren wie vorstehend beschrieben oder wie vorstehend als bevorzugt beschrieben, wobei der Gürtelaufbaustreifen
- parallele, schräg zur Förderrichtung verlaufend angeordnete und in Kautschuk eingebettete Festigkeitsträger umfasst und
- quer zur Förderrichtung des einen Fördermittels zu beiden Seiten hin durch jeweils eine Seitenkante und an seiner vorderen in Förderrichtung gerichteten Seite durch eine Vorderkante und an seiner hinteren in Gegenförderrichtung gerichteten Seite durch eine Hinterkante begrenzt ist, wobei die Vorderkante und die Hinterkante bevorzugt im Wesentlichen parallel zu den Festigkeitsträgern schräg verlaufen, so dass die Vorderkante mit der einen Seitenkante und die Hinterkante mit der anderen Seitenkante jeweils unter Einschluss eines spitzen Winkels - von bevorzugt 10 bis 45°, besonders bevorzugt 20 bis 34° - eine vordere Streifenspitze und eine hintere Streifenspitze bilden, wobei die vordere Streifenspitze und die hintere Streifenspitze derart ausgebildet sind, dass der Zwischenteil des Gürtelaufbaustreifens zwischen der vorderen Streifenspitze und der hinteren Streifenspitze eine rechteckige Form hat.

Bevorzugt ist ein Verfahren wie vorstehend beschrieben oder wie vorstehend als bevorzugt beschrieben, wobei neben dem ersten und/oder zweiten Fördermittel weitere Fördermittel zum Herstellen des Gürtelaufbaustreifens aus einem Endlos-Streifen vorhanden sind, wobei die weiteren Fördermittel bevorzugt weitere Förderbänder sind. Das Herstellen des Gürtelaufbaustreifens aus einem Endlos-Streifen erfolgt dabei bevorzugt durch Zuschneiden mittels einer nachstehend beschriebenen Trennvorrichtung.

Ein Vorteil des vorstehend beschriebenen Aspekts der Erfindung ist, dass durch die beschriebene Anordnung von unmittelbar vor einer Gürtelaufbautrommel angebrachten Fördermitteln in Verbindung mit unmittelbar vor den Fördermitteln angebrachten Trennvorrichtungen, der Aufbau der gesamten Gürtelaufbauanlage umfassend die Fördermittel, die Trennvorrichtung und die eine, zwei oder mehr als zwei Gürtelaufbautrommeln möglichst platzsparend angeordnet und aufgestellt werden können.

Bevorzugt ist ein Verfahren wie vorstehend beschrieben oder wie vorstehend als bevorzugt beschrieben, wobei die in Förderrichtung des ersten Fördermittels nachgeordnete Gürtelaufbautrommel eine erste Gürtelaufbautrommel und die in Förderrichtung des zweiten Fördermittels nachgeordnete Gürtelaufbautrommel ebenfalls die erste Gürtelaufbautrommel ist.

Ein Vorteil des vorstehend beschriebenen Aspekts der Erfindung ist, dass das Aufwickeln von mehreren Gürtelaufbaustreifen auf eine Gürtelaufbautrommel ermöglicht wird.

In anderen Fällen kann auch ein Verfahren wie vorstehend beschrieben oder wie vorstehend als bevorzugt beschrieben bevorzugt sind, wobei die in Förderrichtung des ersten Fördermittels nachgeordnete Gürtelaufbautrommel eine erste Gürtelaufbautrommel einer Zweitrommelvorrichtung und die in Förderrichtung des zweiten Fördermittels nachgeordnete Gürtelaufbautrommel eine erste Gürtelaufbautrommel einer Zweitrommelvorrichtung ist
und
eine zweite Gürtelaufbautrommel in der Zweitrommelvorrichtung so ausgelegt ist, dass die zweite Gürtelaufbautrommel der Zweitrommelvorrichtung die Position mit der ersten Gürtelaufbautrommel der Zweitrommelvorrichtung tauschen kann.
Ein Vorteil des vorstehend beschriebenen Aspekts der Erfindung ist, dass sowohl die ersten als auch die zweite Gürtelaufbautrommel gleichzeitig mit einem Aufbaustreifen versehen werden können oder bei der zweiten Gürtelaufbautrommel ein anderer Arbeitsschritt durchgeführt werden kann.
Ein weiterer Vorteil des vorstehend beschriebenen Aspekts der Erfindung ist, dass über das erste Fördermittel ein erster Gürtelaufbaustreifen auf die erste Gürtelaufbautrommel aufgewickelt wird, während auf der zweiten Gürtelaufbautrommel bereits der zweite Gürtelaufbaustreifen auf einen bereits vorher aufgewickelten ersten Gürtelaufbaustreifen aufgewickelt werden kann. Durch anschließendes Austauschen der Positionen der ersten und zweiten Gürtelaufbautrommel können beide Prozesse dauerhaft gleichzeitig durchgeführt werden. Die beschleunigt das Aufwickeln von mehreren Gürtelaufbaustreifen auf eine Gürtelaufbautrommel.

Bevorzugt ist ein Verfahren wie vorstehend beschrieben oder wie vorstehend als bevorzugt beschrieben, wobei die Fördermittel Förderbänder sind, bevorzugt Förderbänder zum Transport von Gürtelaufbaustreifen.

Bevorzugt ist ein Verfahren wie vorstehend beschrieben oder wie vorstehend als bevorzugt beschrieben, wobei die Verschiebungsrichtung des Verschieben des ersten und des zweiten Fördermittels schräg zur Förderrichtung des jeweiligen Fördermittels verläuft, wobei
- die Förderrichtung des ersten Fördermittels zur ersten Verschiebungsrichtung bevorzugt einen ersten Winkel von 10° bis 45° aufspannt, besonders bevorzugt in einem ersten Winkel von 20° bis 34°,
   und
- die zweite Verschiebungsrichtung zur Förderrichtung des zweiten Fördermittels besonders bevorzugt einen zweiten Winkel von 10° bis 45° aufspannt, besonders bevorzugt in einem zweiten Winkel von 20° bis 34°.

Ein Vorteil des vorstehend beschriebenen Aspekts der Erfindung ist, dass durch die Verwendung von zwei Förderbändern von der Trommel, wobei beide Förderbänder schräg verschoben werden, der Prozess besonders stark beschleunigt werden kann. Dies gilt umso mehr, wenn gleichzeitig auch noch eine Zweitrommelvorrichtung wie vorstehend oder nachstehend beschrieben vorliegt.

Bevorzugt ist ein Verfahren wie vorstehend beschrieben oder wie vorstehend als bevorzugt beschrieben, wobei die Gürtelaufbautrommel während des Schrittes c., c1. oder c2., bevorzugt während des gesamten Verfahrens, nicht parallel zu der Drehachse der Gürtelaufbautrommel bewegt wird.

Ein Vorteil des vorstehend beschriebenen Aspekts der Erfindung ist, dass die Gürtelaufbautrommel ein wie vorstehend beschrieben sehr hohes Gewicht aufweist und somit ein schnelles und gleichzeitiges präzises Bewegen der Gürtelaufbautrommel zum Ausrichten des Gürtelaufbaustreifens nicht ausreichend gut geeignet ist. Ein weiterer Vorteil des vorstehend beschriebenen Aspekts der Erfindung ist, dass auf einfache Art und Weise eine Zweitrommelvorrichtung wie vorstehend oder nachstehend beschrieben realisiert werden kann.

Bevorzugt ist ein Verfahren wie vorstehend beschrieben oder wie vorstehend als bevorzugt beschrieben, wobei zeitlich vor dem Schritt c., c1. oder c2. ein oder mehrere Sensoren die Positionen der Vorder-, Seiten- und Hinterkanten der Gürtelaufbaustreifen als einen Ist-Zustand erfassen und bei dem Aufwickeln auf die Gürtelaufbautrommel in dem Schritt c., c1. oder c2. mittels Vergleichs des Ist-Zustand mit einem Soll-Zustand der Vorder-, Seiten- und Hinterkanten der Gürtelaufbaustreifen durch das Verschieben in die jeweilige Verschiebungsrichtung ausgerichtet werden. Bevorzugt wird so auch die Form der vorderen und hinteren Streifenspitze der Gürtelaufbaustreifen ausgerichtet.
Besonders bevorzugt ist das Ausrichten der vorderen Streifenspitze zur hinteren Streifenspitze. Dies hat den Vorteil, dass die vordere Spitze gut regelbar ist, die freie hintere Spitze dazu kaum.

Ein Vorteil des vorstehend beschriebenen Aspekts der Erfindung ist, dass mit so einem Verfahren die Vorder-, Seiten- und Hinterkanten der Gürtelaufbaustreifen besonders schnell und besonders präzise erfasst werden können.
Die Ermittlung des Ist- und Soll-Zustandes erfolgt bevorzugt so wie die Ermittlung der Ist- und Soll-Werte in EP 0 835 747 A2 durchgeführt.

Geeignete Sensoren können beispielsweise Kameras wie eine Zeilenkamera oder eine Fotokamera sein. Die Kameras können besonders bevorzugt im Rahmen des Sheet-of-light-Verfahrens mit einem Laser kombiniert werden. Eine weitere besonders bevorzugte Ausführung des Sheet-of-light-Verfahrens ist im Buch "Microelectronic Systems: Circuits, Systems and Applications" beschrieben (vgl. S. 249 ff., Kapitel 3.1, herausgegeben vom Springer-Verlag, Autoren: Albert Heuberger, Günter Eist, Randolf Hanke; ISBN: 978-3-642-23070-7).

Bevorzugt ist ein Verfahren wie vorstehend beschrieben oder wie vorstehend als bevorzugt beschrieben, wobei
- das erste Fördermittel während Schritt c. oder während Schritt c1. in der Verschiebungsrichtung verschoben wird, um den noch auf dem ersten Fördermittel beförderten ersten Gürtelaufbaustreifenabschnitt auf der in Förderrichtung nachgeordnete Gürtelaufbautrommel auszurichten und/oder
- das zweite Fördermittel während Schritt c2. in der Verschiebungsrichtung verschoben wird, um den noch auf dem zweiten Fördermittel beförderten zweiten Gürtelaufbaustreifenabschnitt auf der in Förderrichtung nachgeordnete Gürtelaufbautrommel auszurichten.

Der noch auf einem Fördermittel beförderte Gürtelaufbaustreifenabschnitt kann teilweise oder in Gänze das Zwischenteil und/oder die hintere Streifenspitze des in Schritt c., c1. oder c2. aufgewickelten Gürtelaufbaustreifens umfassen. Bevorzugt umfasst der noch auf einem Fördermittel beförderte Gürtelaufbaustreifenabschnitt zumindest teilweise die hintere Streifenspitze des in Schritt c., c1. oder c2. aufgewickelten Gürtelaufbaustreifens.

Ein Vorteil des vorstehend beschriebenen Aspekts der Erfindung ist, dass die Abweichungen an dem her- oder bereitgestellten Gürtelaufbaustreifen, insbesondere Abweichungen in der Form der vorderen und hinteren Streifenspitze der Gürtelaufbaustreifen, beim Aufwickeln schnell und präzise korrigiert werden können. Bevorzugt werden die vorstehend beschriebenen Sensoren auch hier wie vorstehend beschrieben oder wie vorstehend als bevorzugt beschrieben eingesetzt.

Bevorzugt ist ein Verfahren wie vorstehend beschrieben oder wie vorstehend als bevorzugt beschrieben, insbesondere wie vorstehend als besonders bevorzugt beschrieben, wobei zur Ausrichtung in dem Schritt c., c1. oder c2. in einem ersten Verfahrensunterschritt die in Förderrichtung vordere Streifenspitze des Gürtelaufbaustreifens hinsichtlich ihrer Form und ihrer seitlichen Position ausgerichtet wird, wobei in einem zweiten Verfahrensunterschritt das Zwischenteil des Gürtelaufbaustreifens, das sich zwischen vorderer Streifenspitze und hinterer Streifenspitze befindet, hinsichtlich seiner seitlichen Position ausgerichtet wird, und wobei in einem dritten Verfahrensunterschritt die hintere Streifenspitze des Gürtelaufbaustreifens hinsichtlich ihrer Form und ihrer seitlichen Position ausgerichtet wird.

Ein Vorteil des vorstehend beschriebenen Aspekts der Erfindung ist, dass nicht nur die Form der vorderen Streifenspitze und der hinteren Streifenspitze korrigiert werden kann, sondern auch ihre genaue Position, da die vordere Streifenspitze und hintere Streifenspitze sowie die Vorder- und Hinterkante besonders häufig und/oder besonders stark abweichen. Bevorzugt werden die vorstehend beschriebenen Sensoren auch hier wie vorstehend beschrieben oder wie vorstehend als bevorzugt beschrieben eingesetzt.

Bevorzugt ist ein Verfahren wie vorstehend beschrieben oder wie vorstehend als bevorzugt beschrieben, wobei die Fördermittel und/oder die Gürtelaufbautrommeln magnetische Elemente zum Fixieren des Gürtelaufbaustreifens umfassen, wobei der Gürtelaufbaustreifen bevorzugt Stahl oder andere eisenhaltige Material umfasst.

Ein Vorteil des vorstehend beschriebenen Aspekts der Erfindung ist, dass durch die magnetischen Elemente die Gürtelaufbaustreifen besser auf den Fördermitteln oder Gürtelaufbautrommeln gehalten und somit auch ausgerichtet werden können. Bevorzugt umfasst die Gürtelaufbautrommel magnetische Elemente, damit ein Verrutschen des Gürtelaufbaustreifens auf der Gürtelaufbautrommel vermieden wird. Bei einem erfindungsgemäßen Verfahren ist dies auch deswegen sinnvoll, da die durch die magnetischen Elemente noch schwerere Gürtelaufbautrommel nicht zum Ausrichten präzise verschoben werden muss. Insbesondere für das vorstehende beschriebene Ausrichten der vorderen Streifenspitze und der hinteren Streifenspitze eignet sich die Verwendung von den magnetischen Elementen, da die Streifenspitzen so besser ausgerichtet werden können.

Im Rahmen der vorliegenden Erfindung sind magnetische Elemente beispielsweise Permanentmagnete oder Elektromagnete.

Bevorzugt ist ein Verfahren wie vorstehend beschrieben oder wie vorstehend als bevorzugt beschrieben,
- wobei der erste Gürtelaufbaustreifen über zwei das erste Fördermittel umfassende Fördermittel befördert wird
   und
- der zweite Gürtelaufbaustreifen über zwei weitere das zweite Fördermittel umfassende Fördermittel befördert wird,
   wobei bevorzugt das erstes Fördermittel zur Ausrichtung des ersten Gürtelaufbaustreifens auf die erste Gürtelaufbautrommel und auf die zweite Gürtelaufbautrommel ausgerichtet ist und das zweites Fördermittel zur Ausrichtung des zweiten Gürtelaufbaustreifens auf die erste Gürtelaufbautrommel und auf die zweite Gürtelaufbautrommel ausgerichtet ist. Hierbei sind die Fördermittel ebenfalls bevorzugt Förderbänder.

Ein Vorteil des vorstehend beschriebenen Aspekts der Erfindung ist, dass zwei verschiedene Gürtelaufbaustreifen nacheinander auf die erste Gürtelaufbautrommel oder gleichzeitig auf die erste und zweite Gürtelaufbautrommel aufgewickelt werden können. Die Fördermittel, welche nicht zur Ausrichtung eines Gürtelaufbaustreifens geeignet sind, sind dabei die vorstehend beschriebenen Fördermittel mit einer Trennvorrichtung.

Bevorzugt ist ein Verfahren wie vorstehend beschrieben oder wie vorstehend als bevorzugt beschrieben, umfassend die Schritt c1. und c2., wobei der erste und/oder zweite Gürtelaufbaustreifen in Schritt a. jeweils auf einem weiteren, dem ersten oder zweiten Fördermittel vorgeordneten Fördermittel hergestellt oder bereitgestellt wird.
und
der erste und/oder zweite Gürtelaufbaustreifen ein Gürtelaufbaustreifen zur Herstellung eines PkW-Fahrzeugluftreifens ist.

Ein Vorteil des vorstehend beschriebenen Aspekts der Erfindung ist, dass PkW-Fahrzeugluftreifen mit zwei verschiedenen Gürteln mittels dieses Verfahrens besonders zeit- und platzsparend hergestellt werden können. Insbesondere die Herstellungsrate, d.h. aufgebauter Gürtel pro Zeiteinheit, ist bei PkW- Fahrzeugluftreifen größer als bei anderen Reifen und kann somit mit einem erfindungsgemäßen Verfahren besonders gut erreicht werden.

Ganz besonders bevorzugt ist ein Verfahren wie vorstehend beschrieben oder wie vorstehend als bevorzugt beschrieben, wobei zumindest der erste oder der zweite oder erste und zweite Gürtelaufbaustreifen oder der erste, zweite, dritte und vierte Gürtelaufbaustreifen ein Gürtelaufbaustreifen zur Herstellung eines Nutzfahrzeugluftreifen ist.

Ein Vorteil des vorstehend beschriebenen Aspekts der Erfindung ist, dass die Gürtelaufbautrommel samt Antrieb besonders schwer ist und somit wie in einem erfindungsgemäßen Verfahren beschrieben nicht bewegt werden muss.

In besonders hohem Maße bevorzugt ist ein Verfahren wie vorstehend beschrieben, umfassend die folgenden Schritte:
a. Bereitstellen oder Herstellen eines ersten Gürtelaufbaustreifens,
b. Befördern des in Schritt a. bereitgestellten oder hergestellten ersten Gürtelaufbaustreifens
   - über ein erstes Fördermittel des einen Fördermittels
      oder
   - über ein erstes Fördermittel der zwei, drei, vier oder mehr als vier Fördermittel,
c. Ausrichten des auf dem ersten Fördermittel beförderten ersten Gürtelaufbaustreifens gegenüber einer in Förderrichtung nachgeordneten Gürtelaufbautrommel mittels Verschieben des ersten Fördermittels in einer zur Förderrichtung des ersten Fördermittels unterschiedlichen ersten Verschiebungsrichtung und gleichzeitiges Aufwickeln des ersten Gürtelaufbaustreifens auf die in Förderrichtung nachgeordnete Gürtelaufbautrommel,
   wobei
   - zwischen Schritt b. und Schritt c. der erste Gürtelaufbaustreifen auf keinem weiteren Förderband befördert wird,
   - das erste Förderband und die erste Gürtelaufbautrommel magnetische Elemente zum Fixieren des Gürtelaufbaustreifens umfassen, wobei der Gürtelaufbaustreifen Stahl oder andere eisenhaltige Material umfasst und der Gürtelaufbaustreifen ein Gürtelaufbaustreifen zur Herstellung eines Nutzfahrzeugluftreifens ist,
      und
   - das erste Fördermittel während Schritt c. oder während Schritt c1. in der Verschiebungsrichtung verschoben wird, um den noch auf dem ersten Fördermittel beförderten ersten Gürtelaufbaustreifenabschnitt auf der in Förderrichtung nachgeordnete Gürtelaufbautrommel auszurichten.

In besonders hohem Maße bevorzugt ist auch ein Verfahren wie vorstehend beschrieben,
wobei das Verfahren die folgenden Schritte umfasst:
   a. Bereitstellen oder Herstellen eines ersten und eines zweiten Gürtelaufbaustreifens,
   b. Befördern des in Schritt a. bereitgestellten oder hergestellten ersten Gürtelaufbaustreifens über ein erstes Fördermittel mindestens zweier Fördermittel und des in Schritt a. bereitgestellten oder hergestellten zweiten Gürtelaufbaustreifens über ein zweites Fördermittel der mindestens zwei Fördermittel,
   c.1 Ausrichten des auf dem ersten Fördermittel beförderten ersten Gürtelaufbaustreifens gegenüber einer in Förderrichtung nachgeordneten Gürtelaufbautrommel mittels Verschieben des ersten Fördermittels in einer zur Förderrichtung des ersten Fördermittels unterschiedlichen erste Verschiebungsrichtung und gleichzeitiges Aufwickeln des ersten Gürtelaufbaustreifens auf die in Förderrichtung des ersten Fördermittels nachgeordnete Gürtelaufbautrommel,
   c.2 Ausrichten des auf dem zweiten Fördermittel beförderten zweiten Gürtelaufbaustreifens gegenüber einer in Förderrichtung nachgeordneten Gürtelaufbautrommel mittels Verschieben des ersten Fördermittels in einer zur Förderrichtung des zweiten Fördermittels unterschiedlichen zweiten Verschiebungsrichtung und gleichzeitiges Aufwickeln des zweiten Gürtelaufbaustreifens auf die in Förderrichtung des zweiten Fördermittels nachgeordnete Gürtelaufbautrommel,
wobei
   - das erste und das zweites Fördermittel in einer Ebene nebeneinander angeordnet sind,
   - während des Schritts c1. sowie während des Schritts c2. der erste und zweite Gürtelaufbaustreifen auf keinem weiteren Förderband befördert werden,
   - die Förderbänder und die Gürtelaufbautrommeln magnetische Elemente zum Fixieren des Gürtelaufbaustreifens umfassen, wobei der Gürtelaufbaustreifen Stahl oder andere eisenhaltige Material umfasst und der Gürtelaufbaustreifen ein Gürtelaufbaustreifen zur Herstellung eines PkW-Fahrzeugluftreifens ist,
   - das erste Fördermittel während Schritt c1. in der Verschiebungsrichtung verschoben wird, um den noch auf dem ersten Fördermittel beförderten ersten Gürtelaufbaustreifenabschnitt auf der in Förderrichtung nachgeordnete Gürtelaufbautrommel auszurichten
   und
   - das zweite Fördermittel während Schritt c2. in der Verschiebungsrichtung verschoben wird, um den noch auf dem zweiten Fördermittel beförderten zweiten Gürtelaufbaustreifenabschnitt auf der in Förderrichtung nachgeordnete Gürtelaufbautrommel auszurichten.

Die vorstehend beschriebenen vorteilhaften Aspekte eines erfindungsgemäßen Verfahrens gelten auch für sämtliche Aspekte einer nachstehend beschriebenen Vorrichtung und die nachstehend diskutierten vorteilhaften Aspekte erfindungsgemäßer Vorrichtungen gelten entsprechend für sämtliche Aspekte eines erfindungsgemäßen Verfahrens.

Die Erfindung betrifft auch eine Vorrichtung zum Aufwickeln eines zur Herstellung eines Gürtels eines Fahrzeugluftreifens geeigneten Gürtelaufbaustreifens auf eine nachgeordnete Gürtelaufbautrommel nach Anspruch 9, bevorzugt gemäß einem Verfahren wie vorstehend beschrieben oder wie vorstehend als bevorzugt beschrieben, umfassend:
a. eine, zwei oder weitere Gürtelaufbautrommel
b. ein erstes der Gürtelaufbautrommel in Förderrichtung vorgeordnete Fördermittel zum Aufwickeln eines Gürtelaufbaustreifens auf eine Gürtelaufbautrommel und
c. Mittel zum Verschieben des ersten Fördermittels in einer zur Förderrichtung des ersten Fördermittels unterschiedlichen ersten Verschiebungsrichtung, sodass ein auf dem Fördermittel beförderter Gürtelaufbaustreifen auf der Gürtelaufbautrommel ausgerichtet werden kann.

Bevorzugt ist eine Vorrichtung wie vorstehend beschrieben oder wie vorstehend als bevorzugt beschrieben, wobei die Mittel zum Verschieben des ersten Fördermittels Profilschienen oder eine allgemein bekannte Linearführung wie vorstehend beschrieben oder wie vorstehend als bevorzugt beschrieben umfasst.

Bevorzugt ist auch eine Vorrichtung wie vorstehend beschrieben oder wie vorstehend als bevorzugt beschrieben, wobei die Vorrichtung eine Trennvorrichtung zum Herstellen eines Gürtelaufbaustreifens aus einem Endlos-Streifens wie vorstehend beschrieben oder wie vorstehend als bevorzugt beschrieben umfasst.

Bevorzugt ist eine Vorrichtung wie vorstehend beschrieben oder wie vorstehend als bevorzugt beschrieben, wobei die Mittel zum Verschieben des ersten Fördermittels, die Antriebsmittel des ersten Fördermittels so geregelt werden können, dass zur Ausrichtung in dem Schritt c., c1. oder c2. in einem ersten Verfahrensunterschritt die in Förderrichtung vordere Streifenspitze des Gürtelaufbaustreifens hinsichtlich ihrer Form und ihrer seitlichen Position ausgerichtet wird, wobei in einem zweiten Verfahrensunterschritt das Zwischenteil des Gürtelaufbaustreifens, das sich zwischen vorderer Streifenspitze und hinterer Streifenspitze befindet, hinsichtlich seiner seitlichen Position ausgerichtet wird, und wobei in einem dritten Verfahrensunterschritt die hintere Streifenspitze des Gürtelaufbaustreifens hinsichtlich ihrer Form und ihrer seitlichen Position ausgerichtet wird.

### Figurenbeschreibung:

Es zeigt:
- Figur 1:: Eine Draufsicht auf eine erfindungsgemäße Vorrichtung mit einer Gürtelaufbautrommel, wobei Figur 1 die Vorrichtung in einem Prozesszustand zeigt, der zeitlich vor dem Schritt a. eines erfindungsgemäßen Verfahrens liegt;
- Figur 2:: Eine Draufsicht auf eine erfindungsgemäße Vorrichtung mit einer Gürtelaufbautrommel, wobei Figur 2 die Vorrichtung in einem Prozesszustand zeigt, der zeitlich zwischen den Schritten b. und c1. eines erfindungsgemäßen Verfahrens liegt;
- Figur 3:: Eine Draufsicht auf eine erfindungsgemäße Vorrichtung mit einer Gürtelaufbautrommel, wobei Figur 3 die Vorrichtung in einem Prozesszustand zeigt, der zeitlich während des Schrittes c1. eines erfindungsgemäßen Verfahrens liegt;
- Figur 4:: Eine Draufsicht auf eine erfindungsgemäße Vorrichtung mit einer Gürtelaufbautrommel, wobei Figur 4 die Vorrichtung in einem Prozesszustand zeigt, der zeitlich während des Schrittes c2. eines erfindungsgemäßen Verfahrens liegt;
- Figur 5:: Eine Draufsicht auf eine erfindungsgemäße Vorrichtung mit einer Zweitrommelvorrichtung, wobei Figur 5 die Vorrichtung in einem Prozesszustand zeigt, der zeitlich während des Schrittes b. eines erfindungsgemäßen Verfahrens liegt;
- Figur 6:: Eine Draufsicht auf eine erfindungsgemäße Vorrichtung mit einer Zweitrommelvorrichtung, wobei Figur 6 die Vorrichtung in einem Prozesszustand zeigt, der zeitlich während der Schritte c. eines erfindungsgemäßen Verfahrens liegt;
- Figur 7:: Eine Draufsicht auf eine erfindungsgemäße Vorrichtung mit einer Zweitrommelvorrichtung, wobei die erste und die zweite Gürtelaufbautrommel im Vergleich zu Figur 6 aufgrund einer Drehung um die Drehachse der Zweitrommelvorrichtung ihre Positionen getauscht haben.

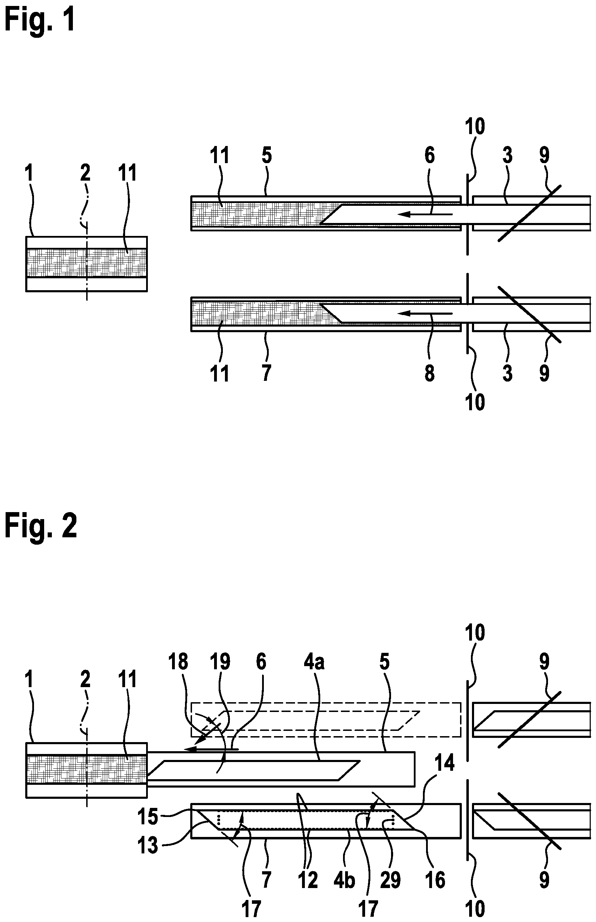

Figur 1 zeigte eine schematische Darstellung einer erfindungsgemäßen Vorrichtung mit einer Gürtelaufbautrommel 1 gemäß einer ersten Ausführungsform in Draufsicht. Die in der Figur 1 schematisch dargestellte Gürtelaufbautrommel 1 umfasst zudem magnetische Elemente 11 zum Fixieren des Gürtelaufbaustreifens 4. Die Drehachse 2 der ersten Gürtelaufbautrommel 1 ist auch dargestellt. In Figur 1 sind zudem schematisch ein erstes Fördermittel 5 und ein zweites Fördermittel 7 dargestellt, auf denen jeweils ein Endlosstreifen 3 in die jeweilige Förderrichtung 6, 8 bis zum Erreichen der Trennposition für die Trennvorrichtungen 9 befördert wird. Die in Figur 1 dargestellten Trennvorrichtungen 9 befinden sich jeweils über einem weiteren Fördermittel, wobei eines der beiden weiteren Fördermittel dem ersten Fördermittel 5 vorgeordnet ist und das andere der beiden weiteren Fördermittel dem zweiten Fördermittel 7 vorgeordnet ist.

Wie in Figur 1 schematisch dargestellt, umfassen das erste und das zweite Fördermittel 5, 7 jeweils magnetische Elemente 11. Der Übersichtlichkeit wegen sind die magnetischen Elemente in den weitern Figuren 2 bis 7 nicht mehr in den Fördermittel dargestellt sind. Es versteht sich jedoch, dass die Fördermittel und Förderbänder in den weitern Figuren 2 bis 7 ebenfalls magnetische Elemente wie in Figur 1 dargestellt aufweisen.

Zudem sind in Figur 1 schematisch zwei Sensoren 10 dargestellt, welche die Positionen der Seitenkanten 12 des Gürtelaufbaustreifens 4 beim Übergang von einem weiteren Fördermittel auf das erste Fördermittel 5 bzw. das zweite Fördermittel 6 ermitteln. Somit wird beim Übergang eines Gürtelaufbaustreifens 4 von einem weiteren Fördermittel auf das erstes Fördermittel 5 oder auf das zweite Fördermittel 7 der Ist-Zustand der Seitenkanten, der vorderen Streifenspitze 15 und der hinteren Streifenspitze 16 ermittelt.

Nach der in Figur 1 schematisch dargestellten Situation des erfindungsgemäßen Verfahrens oder der erfindungsgemäßen Vorrichtung würde das Trennen des Endlosstreifens 3 zur Herstellung eines Gürtelaufbaustreifens erfolgen. Danach würden der hierdurch entstandene erste und zweite Gürtelaufbaustreifen auf das erste Förderband 5 und das zweite Förderband 7 mittig befördert. Im Anschluss daran würde dann der in der Figur 2 schematisch dargestellte folgende Verfahrensschritt durchgeführt werden.

Die in Förderrichtung 6 laufende Förderbandoberfläche des ersten Förderbandes ist in Figur 1 planparallel zu der in Förderrichtung 8 laufende Förderbandoberfläche des zweiten Förderbandes 7. Dies gilt auch für die Förderbänder der Figuren 2 bis 4, in denen das erste und das zweites Förderband 5, 7 immer in einer Ebene nebeneinander angeordnet sind.

Figur 2 zeigte eine schematische Darstellung einer erfindungsgemäßen Vorrichtung mit einer Gürtelaufbautrommel 1 gemäß einer weiteren Ausführungsform in Draufsicht. Die in der Figur 2 schematisch dargestellte Gürtelaufbautrommel 1 umfasst magnetische Elemente 11 zum Fixieren des Gürtelaufbaustreifens 4. Die Drehachse 2 der ersten Gürtelaufbautrommel 1 ist auch dargestellt. In Figur2 sind zudem schematisch ein erstes Fördermittel 5 und ein zweites Fördermittel 7 dargestellt, auf denen jeweils ein Gürtelaufbaustreifen 4 in die jeweilige Förderrichtung 6, 8 befördert wird. Die in Figur 2 dargestellten Trennvorrichtungen 9 befinden sich jeweils über einem weiteren Fördermittel, wobei eines der beiden weiteren Fördermittel dem ersten Fördermittel 5 vorgeordnet ist und das andere der beiden weiteren Fördermittel dem zweiten Fördermittel 7 vorgeordnet ist.

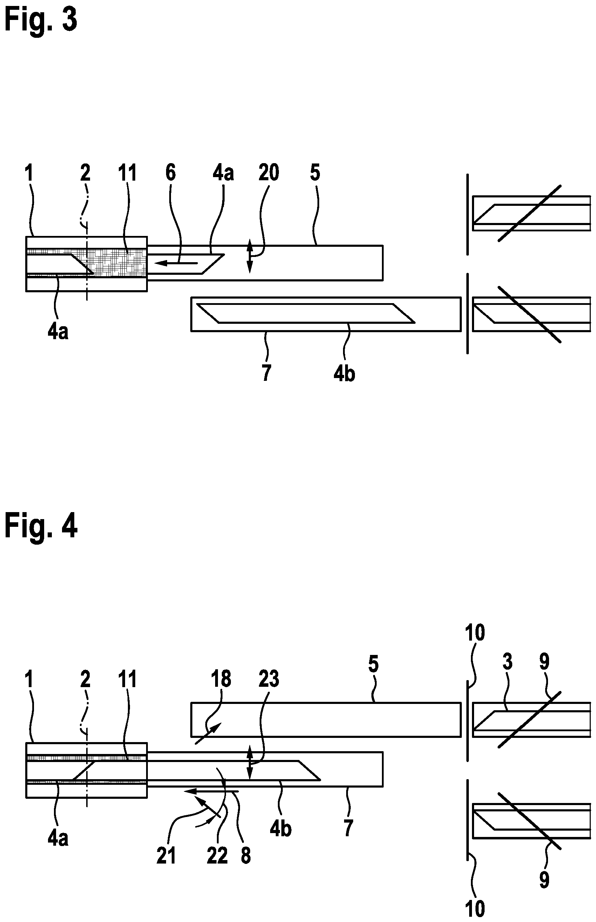

In Figur 2 ist schematisch dargestellt, dass nach dem Positionieren des ersten Gürtelaufbaustreifens 4 in die Mitte des ersten Förderbandes 5 (diese Position ist in Figur 2 durch die gestrichelte Darstellung angedeutet) das erste Förderband 5 in die erste Verschiebungsrichtung 18 verschoben wird und somit vor der Gürtelaufbautrommel 1 in eine Position zum Aufwickeln des auf dem ersten Förderband 5 befindlichen Gürtelaufbaustreifens 4 gebracht wird. Die erste Verschiebungsrichtung 18 bildet dabei mit der Förderrichtung 6 des ersten Förderbandes 5 einen ersten Winkel 19, welcher in Figur 2 ebenfalls schematisch dargestellt ist.
Beim nun folgenden Verfahrensschritt eines erfindungsgemäßen Verfahrens des Aufwickelns des Gürtelaufbaustreifens 4 auf die erste Gürtelaufbautrommel 1 können Abweichungen der Vorderkante, der Seitenkante, der Hinterkante des Gürtelaufbaustreifens sowie der vorderen und hinteren Streifenspitze durch ein aufeinander abgestimmtes Verschieben des ersten Förderbandes 5 in die erste Verschiebungsrichtung 18 und gleichzeitigem Anpassen der Fördergeschwindigkeit des ersten Förderbandes an eine Bewegungskomponente des Verschiebens korrigiert werden, wobei die Bewegungskomponente parallel zur Förderrichtung des ersten Förderbandes 5. Bei diesem Verfahrensschritt des Aufwickelns des Gürtelaufbaustreifens 4 auf die erste Gürtelaufbautrommel 1 kann die Form der vorderen und hinteren Streifenspitze durch
a) ein Verschieben des ersten Förderbandes 5 parallel zur ersten Verschiebungsrichtung 18 und gleichzeitigem
b) Anpassen der Fördergeschwindigkeit des ersten Förderbandes 5 an die parallel zur Förderrichtung des ersten Förderbandes 5 verlaufende Bewegungskomponente der ersten erste Verschiebungsrichtung 18
ausgerichtet werden.
Mit Hilfe der vorstehend beschriebenen Regelung ist es ausreichend, wenn das erste Förderband 5 nur parallel zur ersten Verschiebungsrichtung verschoben werden kann. Dies hat den Vorteil, dass keine weitere Regelung oder Vorrichtung zum Verschieben des ersten Förderbandes 5 parallel zur Drehachse 2 der ersten Gürtelaufbautrommel 1 eingerichtet werden muss. Es ist jedoch auch möglich, weitere Vorkehrungen zu treffen, um ein zur Drehachse 2 der ersten Gürtelaufbautrommel 1 paralleles Verschieben des ersten Förderbandes 5 zu ermöglichen. Ein solch alternatives Verschieben des ersten Förderbandes 5 in eine alternative erste Verschiebungsrichtung ist nachstehend in der Beschreibung zur Figur 3 beschrieben.

Wie vorstehend bereits erwähnt, wurden aus Gründen der Übersichtlichkeit in Figur 3 auf die Darstellung der magnetischen Elemente der Förderbänder verzichtet, insbesondere der des ersten Förderbandes 5 und des zweiten Förderbandes 7. Eine in Figur 2 dargestellte erfindungsgemäße Vorrichtung umfasst dennoch wie vorstehend beschrieben magnetische Elemente.

Hingegen wurde jedoch in Figur 2 zumindest schematisch der Aufbau eines Gürtelaufbaustreifens einmalig dargestellt. Zu sehen sind an dem auf dem zweiten Förderband 7 befindlichen Gürtelaufbaustreifen 4 die Vorderkante 13 und die Hinterkante 16 sowie die Seitenkanten 12 des Gürtelaufbaustreifens 4. Der sich auf dem zweiten Förderband 7 befindliche Gürtelaufbaustreifen 4 umfasst zudem auch eine vordere Streifenspitze 15 und eine hintere Streifenspitze 16, welche jeweils mit den Seitenkanten und der Hinterkante bzw. der Vorderkante einen spitzen Winkel 17 aufspannen. Zwischen der vorderen Streifenspitze 15 und der hinteren Streifenspitze 16 befindet das rechteckige Zwischenteil 29 des Gürtelaufbaustreifens 4, welches durch die gepunkteten Linien angedeutet ist.
Aus Gründen der Übersichtlichkeit ist der vorstehend bestehende spezifische Aufbau eines Gürtelaufbaustreifens 4, wie in Figur 2 dargestellt, in Figur 1 und in den weiteren Figuren nicht noch einmal dargestellt. Die vorstehend beschriebenen Merkmale mit den Bezugszeichen 12 bis 17 gelten jedoch für die anderen in den Figuren 1 bis 7 dargestellten Gürtelaufbaustreifen gleichermaßen.

Figur 3 zeigte eine schematische Darstellung einer erfindungsgemäßen Vorrichtung mit einer Gürtelaufbautrommel 1 gemäß einer weiteren Ausführungsform in Draufsicht. Die in der Figur 3 schematisch dargestellte Gürtelaufbautrommel 1 umfasst magnetische Elemente 11 zum Fixieren des Gürtelaufbaustreifens 4. Die Drehachse 2 der ersten Gürtelaufbautrommel 1 ist auch dargestellt. In Figur 3 sind zudem schematisch ein erstes Fördermittel 5 und ein zweites Fördermittel 7 dargestellt, auf denen jeweils ein Gürtelaufbaustreifen 4 in die jeweilige Förderrichtung 6, 8 befördert wird. Die in Figur 3 dargestellten Trennvorrichtungen 9 befinden sich jeweils über einem weiteren Fördermittel, wobei eines der beiden weiteren Fördermittel dem ersten Fördermittel 5 vorgeordnet ist und das andere der beiden weiteren Fördermittel dem zweiten Fördermittel 7 vorgeordnet ist.

In Figur 3 ist das Verschieben des ersten Förderbands 5 in eine alternative erste Verschiebungsrichtung 20 schematisch dargestellt. Die alternative erste Verschiebungsrichtung 20 bildet dabei mit der Förderrichtung 6 des ersten Förderbandes 5 einen rechten Winkel. Bei dem in Figur 3 dargestellten erfindungsgemäßen Verfahrensschritt des Aufwickelns des Gürtelaufbaustreifens 4 auf die erste Gürtelaufbautrommel 1 können Abweichungen der Vorderkante 13, der Seitenkante 12, der Hinterkante 14 des Gürtelaufbaustreifens sowie in der vorderen und hinteren Streifenspitze 15, 16 durch ein aufeinander abgestimmtes Verschieben des ersten Förderbandes 5 in die alternative erste Verschiebungsrichtung 20 und gleichzeitigem Anpassen der Fördergeschwindigkeit des ersten Förderbandes korrigiert werden. Die Steuerung oder Regelung der alternativen ersten Verschiebungsrichtung 20 in Verbindung mit der Fördergeschwindigkeit des ersten Förderbandes ist somit einfacher als bei einer schrägen ersten Verschiebungsrichtung wie vorstehend zu Figur 2 beschrieben. Bei dem in Figur 3 dargestellten Verfahrensschritt des Aufwickelns des Gürtelaufbaustreifens 4 auf die erste Gürtelaufbautrommel 1 kann die Form der vorderen und die Form der hinteren Streifenspitze durch
a) ein Verschieben des ersten Förderbandes 5 parallel zur alternativen ersten Verschiebungsrichtung 20 (d.h. parallel zur Drehachse 2 der ersten Gürtelaufbautrommel 1)
   und gleichzeitigem
b) Anpassen der Fördergeschwindigkeit des ersten Förderbandes 5
   ausgerichtet werden.
Die vorstehend beschriebene Steuerung oder Regelung muss es erlauben, dass das erste Förderband 5 parallel zur alternativen ersten Verschiebungsrichtung 20 und zur Förderrichtung des ersten Förderbandes 5 verschoben werden kann.

Figur 4 zeigt eine schematische Darstellung einer erfindungsgemäßen Vorrichtung mit einer Gürtelaufbautrommel 1 gemäß einer weiteren Ausführungsform in Draufsicht. Die in der Figur 4 schematisch dargestellte Gürtelaufbautrommel 1 umfasst magnetische Elemente 11 zum Fixieren des Gürtelaufbaustreifens 4. Die Drehachse 2 der ersten Gürtelaufbautrommel 1 ist auch dargestellt. In Figur 4 sind zudem schematisch ein erstes Fördermittel 5 und ein zweites Fördermittel 7 dargestellt. Die in Figur 4 dargestellten Trennvorrichtungen 9 befinden sich jeweils über einem weiteren Fördermittel, wobei eines der beiden weiteren Fördermittel dem ersten Fördermittel 5 vorgeordnet ist und das andere der beiden weiteren Fördermittel dem zweiten Fördermittel 7 vorgeordnet ist. Figur 4 zeigt eine schematische Darstellung einer erfindungsgemäßen Vorrichtung mit einer Gürtelaufbautrommel 1 nach dem der erste Gürtelaufbaustreifen 4a auf die erste Gürteltrommel 1 aufgelegt ist, das erste Förderband 5 wieder in seine ursprüngliche Position zurückgefahren ist und das zweite Förderband 7 vor der ersten Gürtelaufbautrommel 1 in eine Position zum Aufwickeln des auf dem ersten Förderband 5 befindlichen Gürtelaufbaustreifens 4 gebracht wurde.

In Figur 4 ist das Verschieben des zweiten Förderbands 7 in eine alternative zweite Verschiebungsrichtung 23 während des Aufwickelns des zweiten Gürtelaufbaustreifens 4b mithilfe einer alternativen zweiten Verschiebungsrichtung 23 schematisch dargestellt. Die alternative zweite Verschiebungsrichtung 23 bildet dabei mit der Förderrichtung 8 des zweiten Förderbandes 7 einen rechten Winkel. Bei dem in Figur 4 dargestellten erfindungsgemäßen Verfahrensschritt des Aufwickelns des zweiten Gürtelaufbaustreifens 4b auf der ersten Gürtelaufbautrommel 1 können Abweichungen der Vorderkante 13, der Seitenkante 12, der Hinterkante 14 des zweiten Gürtelaufbaustreifens 4b sowie der vorderen und hinteren Streifenspitze 15, 16 durch ein aufeinander abgestimmtes Verschieben des zweiten Förderbandes 7 in die alternative erste Verschiebungsrichtung 20 und gleichzeitigem Anpassen der Fördergeschwindigkeit des zweiten Förderbandes 7 korrigiert werden. Beim Auflegen des zweiten Gürtelaufbaustreifens 4b auf den bereits aufgewickelten ersten Gürtelaufbaustreifen 4a muss zudem darauf geachtet werden, der zweite Gürtelaufbaustreifen 4b deckungsgleich auf den ersten Gürtelaufbaustreifen 4a aufgewickelt wird. Die Steuerung oder Regelung der alternativen zweiten Verschiebungsrichtung 23 in Verbindung mit der Fördergeschwindigkeit des zweiten Förderbandes 7 ist somit einfacher als bei einer schrägen zweiten Verschiebungsrichtung 21. Im Anschluss an den in Figur 4 schematisch dargestellten Verfahrensschritt wird das zweite Förderband 7 wieder in seine ursprüngliche Position gebracht, der erste Gürtelaufbaustreifen 4a und der zweite Gürtelaufbaustreifen 4b weiterverarbeitend von der ersten Gürteltrommel 1 entfernt und die beiden Endlos-Streifen 3 auf das erste Förderband 5 und auf das zweite Förderband 7 befördert. Danach beginnt das erfindungsgemäße Verfahren wieder mit dem in Figur 1 dargestellten Verfahrensschritt.

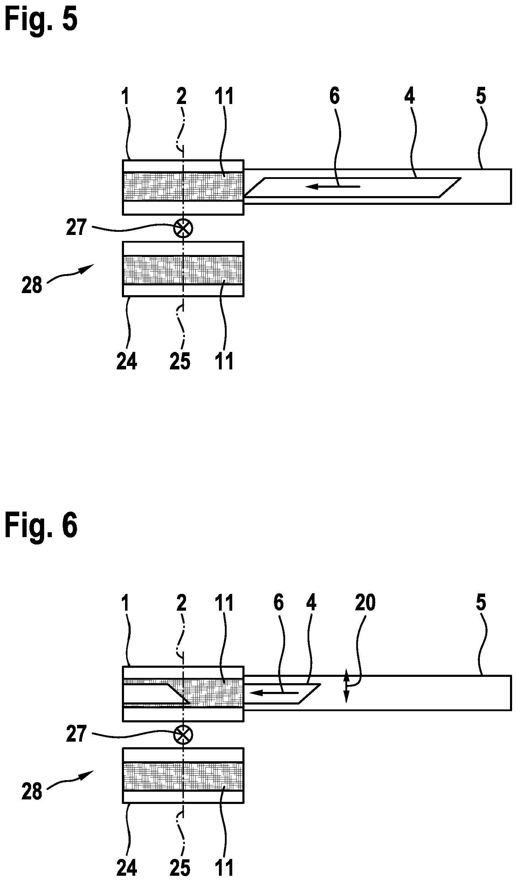

Figur 5 zeigt eine schematische Darstellung einer erfindungsgemäßen Vorrichtung in einer weiteren Ausführungsform umfassend eine Zweitrommelvorrichtung 28.

Die in Figur 5 schematisch dargestellte erfindungsgemäße Vorrichtung umfasst ein erstes Fördermittel 5, welches einen Gürtelaufbaustreifen 4 in die Förderrichtung 6 befördert. Die erfindungsgemäße Vorrichtung umfasst auch eine Zweitrommelvorrichtung 28, welche eine erste Gürtelaufbautrommel 1 und eine zweite Gürtelaufbautrommel 24 umfasst, wobei die zwei Gürtelaufbautrommeln 1, 24 jeweils eine Drehachse 2, 25 und magnetische Elemente 11 aufweisen. Zudem ist die Drehachse 27 der Zweitrommelvorrichtung 28 gezeigt, um welche sich die zwei Gürtelaufbautrommeln 1, 24 drehen können, damit die erste Gürtelaufbautrommel 1 und die zweite Gürtelaufbautrommel 24 ihre Position tauschen. Bei den in Figur 5 bis 7 dargestellten erfindungsgemäßen Vorrichtungen ist jeweils nur ein erstes Förderband 5 dargestellt. Wie jedoch bereits in den Figuren 1 bis 4 schematisch dargestellt, kann auch eine Zweitrommelvorrichtung mit zwei nebeneinander in einer Ebene angeordneten Förderbändern, d.h. ein erstes und ein zweites Förderband, angebracht werden. Durch eine solche erfindungsgemäße Vorrichtung mit einer Zweitrommelvorrichtung und einem ersten und einem zweiten Förderband kann die Herstellungsrate weiter erhöht werden.

Figur 6 zeigt eine schematische Darstellung einer erfindungsgemäßen Vorrichtung in einer weiteren Ausführungsform umfassend eine Zweitrommelvorrichtung 28. Die in Figur 6 schematisch dargestellte erfindungsgemäße Vorrichtung zeigt wie der Gürtelaufbaustreifen 4 auf die erste Gürteltrommel 24 der Zweitrommelvorrichtung 28 aufwickelt wird. Das Aufwickeln des Gürtelaufbaustreifens 4 erfolgt dabei wie in Figur 3 mithilfe eines Verschiebens in eine alternative erste Verschiebungsrichtung 20 beschrieben.

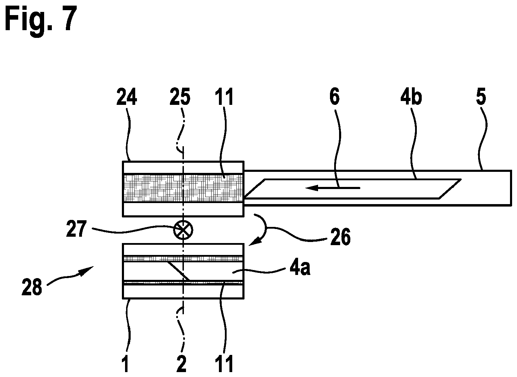

Figur 7 zeigt eine schematische Darstellung einer erfindungsgemäßen Vorrichtung in einer weiteren Ausführungsform umfassend eine Zweitrommelvorrichtung 28. Die Zweitrommelvorrichtung 28 wurden im Vergleich zur Zweitrommelvorrichtung aus Figur 6 um 180° gedreht, sodass die erste Gürtelaufbautrommel 1 nun auf der Position der zweiten Gürtelaufbautrommel 24 ist und *vice versa.* Die in Figur 7 schematisch dargestellte erfindungsgemäße Vorrichtung zeigt wie ein zweiter Gürtelaufbaustreifen 4b in die Förderrichtung 6 befördert und anschließend auf eine zweite Gürteltrommel 24 aufwickelt wird.

### Bezugszeichenliste:

- 1: erste Gürtelaufbautrommel
- 2: Drehachse der ersten Gürtelaufbautrommel
- 3: Endlos-Streifen zur Herstellung eines Gürtelaufbaustreifens
- 4: Gürtelaufbaustreifen
- 4a: erster Gürtelaufbaustreifen
- 4b: zweiter Gürtelaufbaustreifen
- 5: erstes Fördermittel; erstes Förderband
- 6: Förderrichtung des ersten Förderbands
- 7: zweites Fördermittel; zweites Förderband
- 8: Förderrichtung des zweiten Förderbands
- 9: Trennvorrichtung zum Herstellen eines Gürtelaufbaustreifens aus einem Endlos-Streifen
- 10: Sensoren zum Ermitteln der Position einer Seitenkanten eines Gürtelaufbaustreifens
- 11: magnetische Elemente zum Fixieren des Gürtelaufbaustreifens
- 12: Seitenkante
- 13: Vorderkante
- 14: Hinterkante
- 15: vordere Streifenspitze
- 16: hintere Streifenspitze
- 17: spitzer Winkel
- 18: erste Verschiebungsrichtung des ersten Förderbandes
- 19: ersten Winkel des ersten Förderbandes
- 20: alternative erste Verschiebungsrichtung des ersten Förderbandes
- 21: zweite Verschiebungsrichtung des zweiten Förderbandes
- 22: zweiter Winkel des zweiten Förderbandes
- 23: alternative zweite Verschiebungsrichtung des zweiten Förderbandes
- 24: zweite Gürtelaufbautrommel
- 25: Drehachse der zweiten Gürtelaufbautrommel
- 26: Drehrichtung der Zweitrommelvorrichtung
- 27: Drehachse der Zweitrommelvorrichtung
- 28: Zweitrommelvorrichtung
- 29: rechteckiges Zwischenteil des Gürtelaufbaustreifens

## Patentansprüche

1. Verfahren zum Aufwickeln eines zur Herstellung eines Gürtels eines Fahrzeugluftreifens geeigneten Gürtelaufbaustreifens (4) auf eine Gürtelaufbautrommel (1), umfassend die folgenden Schritte:
a. Bereitstellen oder Herstellen eines ersten Gürtelaufbaustreifens (4a),
b. Befördern des in Schritt a. bereitgestellten oder hergestellten ersten Gürtelaufbaustreifens (4a)
- über ein erstes Fördermittel (5) des einen Fördermittels
oder
- über ein erstes Fördermittel (5) der zwei, drei, vier oder mehr als vier Fördermittel,
c. Ausrichten des auf dem ersten Fördermittel (5) beförderten ersten Gürtelaufbaustreifens (4a) gegenüber einer in Förderrichtung nachgeordneten Gürtelaufbautrommel (1) mittels Verschieben des ersten Fördermittels (5) in einer zur Förderrichtung (6) des ersten Fördermittels (5) unterschiedlichen ersten Verschiebungsrichtung (18, 20) und Aufwickeln des ersten Gürtelaufbaustreifens (4a) auf die in Förderrichtung (6) nachgeordnete Gürtelaufbautrommel (1),
**dadurch gekennzeichnet, dass**
das Ausrichten und das Aufwickeln in Schritt c. gleichzeitig durchgeführt wird.

2. Verfahren nach Anspruch 1, wobei die erste Verschiebungsrichtung (18, 20) relativ zur Förderrichtung (6) des ersten Förderbandes (5) schräg oder rechtwinklig ist.

3. Verfahren nach einem der vorangehenden Ansprüche, wobei das Verfahren die folgenden Schritte umfasst:
a. Bereitstellen oder Herstellen eines ersten und eines zweiten Gürtelaufbaustreifens (4a, 4b),
b. Befördern des in Schritt a. bereitgestellten oder hergestellten ersten Gürtelaufbaustreifens (4a) über ein erstes Fördermittel (5) mindestens zweier Fördermittel (5,7) und des in Schritt a. bereitgestellten oder hergestellten zweiten Gürtelaufbaustreifens (4b) über ein zweites Fördermittel (7) der mindestens zwei Fördermittel (5, 7),
c.1 Ausrichten des auf dem ersten Fördermittel (5) beförderten ersten Gürtelaufbaustreifens (4a) gegenüber einer in Förderrichtung (6, 8) nachgeordneten Gürtelaufbautrommel (1) mittels Verschieben des ersten Fördermittels (5) in einer zur Förderrichtung (6) des ersten Fördermittels (5) unterschiedlichen ersten Verschiebungsrichtung (18, 20) und gleichzeitiges Aufwickeln des ersten Gürtelaufbaustreifens (4a) auf die in Förderrichtung (6) des ersten Fördermittels (5) nachgeordnete Gürtelaufbautrommel (1),
c.2 Ausrichten des auf dem zweiten Fördermittel (7) beförderten zweiten Gürtelaufbaustreifens (4b) gegenüber einer in Förderrichtung (8) nachgeordneten Gürtelaufbautrommel (1) mittels Verschieben des zweiten Fördermittels (7) in einer zur Förderrichtung (8) des zweiten Fördermittels (7) unterschiedlichen zweiten Verschiebungsrichtung (21, 23) und gleichzeitiges Aufwickeln des zweiten Gürtelaufbaustreifens (4b) auf die in Förderrichtung (8) des zweiten Fördermittels (7) nachgeordnete Gürtelaufbautrommel (1),
wobei das erste und das zweites Fördermittel (5, 7) in einer Ebene nebeneinander angeordnet sind.

4. Verfahren nach einem der vorangehenden Ansprüche, wobei die Verschiebungsrichtung (18, 21) des Verschieben des ersten und des zweiten Fördermittels (5, 7) schräg zur Förderrichtung (6, 8) des jeweiligen Fördermittels (5, 7) verläuft, wobei
- die Förderrichtung (6) des ersten Fördermittels (5) zur ersten Verschiebungsrichtung (18) einen ersten Winkel (19) von 10° bis 45° aufspannt, und
- die zweite Verschiebungsrichtung (20) zur Förderrichtung (8) des zweiten Fördermittels (7) einen zweiten Winkel (22) von 10° bis 45° aufspannt.

5. Verfahren nach einem der vorangehenden Ansprüche, wobei die Gürtelaufbautrommel (1) während des Schrittes c., c1. oder c2. nicht parallel zu der Drehachse (2) der Gürtelaufbautrommel (1) bewegt wird.

6. Verfahren nach einem der vorangehenden Ansprüche, wobei
- das erste Fördermittel (5) während Schritt c. oder während Schritt c1. in der Verschiebungsrichtung (18, 20) verschoben wird, um den noch auf dem ersten Fördermittel (5) beförderten ersten Gürtelaufbaustreifenabschnitt auf der in Förderrichtung (6) nachgeordnete Gürtelaufbautrommel (1) auszurichten und/oder
- das zweite Fördermittel (7) während Schritt c2. in der Verschiebungsrichtung (21, 23) verschoben wird, um den noch auf dem zweiten Fördermittel (7) beförderten zweiten Gürtelaufbaustreifenabschnitt auf der in Förderrichtung (8) nachgeordnete Gürtelaufbautrommel (1) auszurichten.

7. Verfahren nach einem der vorangehenden Ansprüche, wobei die Fördermittel (5, 7) und/oder die Gürtelaufbautrommeln (1, 24) magnetische Elemente (11) zum Fixieren des Gürtelaufbaustreifens (4) umfassen.

8. Verfahren nach einem der vorangehenden Ansprüche, wobei
der erste und/oder zweite Gürtelaufbaustreifen (4a, 4b) ein Gürtelaufbaustreifen zur Herstellung eines PkW-Fahrzeugluftreifens ist oder
zumindest der erste und/oder zweite Gürtelaufbaustreifen (4a, 4b) ein Gürtelaufbaustreifen zur Herstellung eines Nutzfahrzeugluftreifen ist.

9. Vorrichtung zum Aufwickeln eines zur Herstellung eines Gürtels eines Fahrzeugluftreifens geeigneten Gürtelaufbaustreifens (4) auf eine nachgeordnete Gürtelaufbautrommel (1) umfassend:
a. eine Gürtelaufbautrommel (1)
b. ein erstes der Gürtelaufbautrommel (1) in Förderrichtung (6) vorgeordnetes Fördermittel (5) zum Aufwickeln eines Gürtelaufbaustreifens (4) auf eine Gürtelaufbautrommel (1) und
c. Mittel zum Verschieben des ersten Fördermittels (5) in einer zur Förderrichtung (6) des ersten Fördermittels (5) unterschiedlichen ersten Verschiebungsrichtung (18, 20),
**dadurch gekennzeichnet, dass**
die besagten Mittel eingerichtet sind, das erste Fördermittel (5) in einer zur Förderrichtung (6) des ersten Fördermittels (5) unterschiedlichen ersten Verschiebungsrichtung (18, 20) so zu verschieben, dass während des Aufwickelns auf die Gürtelaufbautrommel (1) ein auf dem Fördermittel (5) beförderter Gürtelaufbaustreifen (4) auf der Gürtelaufbautrommel (1) ausgerichtet werden kann.

10. Vorrichtung nach Anspruch 9, wobei die Vorrichtung mindestens eine erste und eine zweite Gürtelaufbautrommel umfasst und die erste oder zweite Gürtelaufbautrommel nicht parallel zur Drehachse der ersten oder zweiten Gürtelaufbautrommel verschoben werden kann.

## Claims

1. Method for winding a belt building strip (4), suitable for the production of a belt of a pneumatic vehicle tyre, onto a belt building drum (1), comprising the following steps:
a. providing or producing of a first belt building strip (4a),
b. conveying of the first belt building strip (4a) which is provided or produced in step a.
- via a first conveying means (5) of the one conveying means,
or
- via a first conveying means (5) of the two, three, four or more than four conveying means,
c. aligning of the first belt building strip (4a), conveyed on the first conveying means (5), with respect to a belt building drum (1), arranged downstream in the conveying direction, by means of displacement of the first conveying means (5) in a first displacement direction (18, 20) which is different to the conveying direction (6) of the first conveying means (5), and winding of the first belt building strip (4a) onto the belt building drum (1) which is arranged downstream in the conveying direction (6),
**characterized in that**
the aligning and the winding are carried out at the same time in step c.

2. Method according to Claim 1, the first displacement direction (18, 20) being oblique or at a right angle relative to the conveying direction (6) of the first conveying belt (5).

3. Method according to either of the preceding claims, the method comprising the following steps:
a. providing or producing of a first and a second belt building strip (4a, 4b),
b. conveying of the first belt building strip (4a), provided or produced in step a., via a first conveying means (5) of at least two conveying means (5, 7), and of the second belt building strip (4b), provided or produced in step a., via a second conveying means (7) of the at least two conveying means (5, 7),
c.1 aligning of the first belt building strip (4a), conveyed on the first conveying means (5), with respect to a belt building drum (1) arranged downstream in the conveying direction (6, 8) by means of displacement of the first conveying means (5) in a first displacement direction (18, 20) which is different to the conveying direction (6) of the first conveying means (5), and simultaneous winding of the first belt building strip (4a) onto the belt building drum (1) which is arranged downstream in the conveying direction (6) of the first conveying means (5),
c.2 aligning of the second belt building strip (4b), conveyed on the second conveying means (7), with respect to a belt building drum (1) arranged downstream in the conveying direction (8) by means of displacement of the second conveying means (7) in a second displacement direction (21, 23) which is different to the conveying direction (8) of the second conveying means (7), and simultaneous winding of the second belt building strip (4b) onto the belt building drum (1) which is arranged downstream in the conveying direction (8) of the second conveying means (7),
the first and the second conveying means (5, 7) being arranged in one plane next to one another.

4. Method according to one of the preceding claims, the displacement direction (18, 21) of the displacement of the first and the second conveying means (5, 7) running obliquely with respect to the conveying direction (6, 8) of the respective conveying means (5, 7),
- the conveying direction (6) of the first conveying means (5) defining a first angle (19) of from 10° to 45° with respect to the first displacement direction (18), and
- the second displacement direction (20) defining a second angle (22) of from 10° to 45° with respect to the conveying direction (8) of the second conveying means (7) .

5. Method according to one of the preceding claims, the belt building drum (1) being moved in a non-parallel manner with respect to the rotational axis (2) of the belt building drum (1) during step c., c1. or c2.

6. Method according to one of the preceding claims,
- the first conveying means (5) being displaced in the displacement direction (18, 20) during step c. or during step c1., in order to align the first belt building strip section, still being conveyed on the first conveying means (5), on the belt building drum (1) which is arranged downstream in the conveying direction (6), and/or
- the second conveying means (7) being displaced in the displacement direction (21, 23) during step c2., in order to align the second belt building strip section, still being conveyed on the second conveying means (7), on the belt building drum (1) which is arranged downstream in the conveying direction (8).

7. Method according to one of the preceding claims, the conveying means (5, 7) and/or the belt building drums (1, 24) comprising magnetic elements (11) for fixing the belt building strip (4).

8. Method according to one of the preceding claims,
the first and/or second belt building strip (4a, 4b) being a belt building strip for producing a passenger car pneumatic vehicle tyre, or
at least the first and/or second belt building strip (4a, 4b) being a belt building strip for producing a utility vehicle pneumatic tyre.

9. Apparatus for winding a belt building strip (4), suitable for producing a belt of a pneumatic vehicle tyre, onto a downstream belt building drum (1) comprising:
a. a belt building drum (1),
b. a first conveying means (5), arranged upstream of the belt building drum (1) in the conveying direction (6), for winding a belt building strip (4) onto a belt building drum (1), and
c. means for displacing the first conveying means (5) in a first displacement direction (18, 20) which is different to the conveying direction (6) of the first conveying means (5),
**characterized in that**
said means are set up to displace the first conveying means (5) in a first displacement direction (18, 20), which is different to the conveying direction (6) of the first conveying means (5), in such a way that, during the winding onto the belt building drum (1), a belt building strip (4) which is conveyed on the conveying means (5) can be aligned on the belt building drum (1).

10. Apparatus according to Claim 9, the apparatus comprising at least one first and one second belt building drum, and it being possible for the first or second belt building drum to be displaced in a non-parallel manner with respect to the rotational axis of the first or second belt building drum.

## Revendications

1. Procédé d'enroulement d'une bande de construction de ceinture (4) appropriée pour la fabrication d'une ceinture d'un pneumatique de véhicule sur un tambour de construction de ceinture (1), comprenant les étapes suivantes :
a. la fourniture ou la fabrication d'une première bande de construction de ceinture (4a),
b. l'acheminement de la première bande de construction de ceinture (4a) fournie ou fabriquée dans l'étape a.
- par l'intermédiaire d'un premier moyen de transport (5) parmi le moyen de transport ou
- par l'intermédiaire d'un premier moyen de transport (5) parmi deux, trois, quatre ou plus de quatre moyens de transport,
c. l'alignement de la première bande de construction de ceinture (4a) acheminée sur le premier moyen de transport (5) par rapport à un tambour de construction de ceinture (1) agencé en aval dans la direction de transport par décalage du premier moyen de transport (5) dans une première direction de décalage (18, 20) différente de la direction de transport (6) du premier moyen de transport (5) et l'enroulement de la première bande de construction de ceinture (4a) sur le tambour de construction de ceinture (1) agencé en aval dans la direction de transport (6),
**caractérisé en ce que**
l'alignement et l'enroulement dans l'étape c. sont réalisés simultanément.

2. Procédé selon la revendication 1, dans lequel la première direction de décalage (18, 20) est en biais ou à angle droit par rapport à la direction de transport (6) de la première bande de transport (5).

3. Procédé selon l'une quelconque des revendications précédentes, dans lequel le procédé comprend les étapes suivantes :
a. la fourniture ou la fabrication d'une première et d'une deuxième bande de construction de ceinture (4a, 4b),
b. l'acheminement de la première bande de construction de ceinture (4a) fournie ou fabriquée dans l'étape a. par l'intermédiaire d'un premier moyen de transport (5) parmi au moins deux moyens de transport (5, 7) et de la deuxième bande de construction de ceinture (4b) fournie ou fabriquée dans l'étape a. par l'intermédiaire d'un deuxième moyen de transport (7) parmi les au moins deux moyens de transport (5, 7),
c.1 l'alignement de la première bande de construction de ceinture (4a) acheminée sur le premier moyen de transport (5) par rapport à un tambour de construction de ceinture (1) agencé en aval dans la direction de transport (6, 8) par décalage du premier moyen de transport (5) dans une première direction de décalage (18, 20) différente de la direction de transport (6) du premier moyen de transport (5) et l'enroulement simultané de la première bande de construction de ceinture (4a) sur le tambour de construction de ceinture (1) agencé en aval dans la direction de transport (6)du premier moyen de transport (5),
c.2 l'alignement de la deuxième bande de construction de ceinture (4b) acheminée sur le deuxième moyen de transport (7) par rapport à un tambour de construction de ceinture (1) agencé en aval dans la direction de transport (8) par décalage du deuxième moyen de transport (7) dans une deuxième direction de décalage (21, 23) différente de la direction de transport (8) du deuxième moyen de transport (7) et l'enroulement simultané de la deuxième bande de construction de ceinture (4b) sur le tambour de construction de ceinture (1) agencé en aval dans la direction de transport (8) du deuxième moyen de transport (7),
le premier et le deuxième moyen de transport (5, 7) étant agencés l'un à côté de l'autre dans un plan.

4. Procédé selon l'une quelconque des revendications précédentes, dans lequel la direction de décalage (18, 21) du décalage du premier et du deuxième moyen de transport (5, 7) est en biais par rapport à la direction de transport (6, 8) du moyen de transport respectif (5, 7),
- la direction de transport (6) du premier moyen de transport (5) formant un premier angle (19) de 10° à 45° par rapport à la première direction de décalage (18), et
- la deuxième direction de décalage (20) formant un deuxième angle (22) de 10° à 45° par rapport à la direction de transport (8) du deuxième moyen de transport (7).

5. Procédé selon l'une quelconque des revendications précédentes, dans lequel le tambour de construction de ceinture (1) n'est pas déplacé parallèlement à l'axe de rotation (2) du tambour de construction de ceinture (1) pendant l'étape c., c1. ou c2.

6. Procédé selon l'une quelconque des revendications précédentes, dans lequel
- le premier moyen de transport (5) est décalé dans la direction de décalage (18, 20) pendant l'étape c. ou pendant l'étape c1., afin d'aligner la première section de bande de construction de ceinture encore acheminée sur le premier moyen de transport (5) sur le tambour de construction de ceinture (1) agencé en aval dans la direction de transport (6) et/ou
- le deuxième moyen de transport (7) est décalé dans la direction de décalage (21, 23) pendant l'étape c2., afin d'aligner la deuxième section de bande de construction de ceinture encore acheminée sur le deuxième moyen de transport (7) sur le tambour de construction de ceinture (1) agencé en aval dans la direction de transport (8).

7. Procédé selon l'une quelconque des revendications précédentes, dans lequel les moyens de transport (5, 7) et/ou les tambours de construction de ceinture (1, 24) comprennent des éléments magnétiques (11) pour la fixation de la bande de construction de ceinture (4).

8. Procédé selon l'une quelconque des revendications précédentes, dans lequel
la première et/ou la deuxième bande de construction de ceinture (4a, 4b) est une bande de construction de ceinture pour la fabrication d'un pneumatique de voiture particulière ou
au moins la première et/ou la deuxième bande de construction de ceinture (4a, 4b) est une bande de construction de ceinture pour la fabrication d'un pneumatique de véhicule utilitaire.

9. Dispositif pour l'enroulement d'une bande de construction de ceinture (4) appropriée pour la fabrication d'une ceinture d'un pneumatique de véhicule sur un tambour de construction de ceinture (1) agencé en aval, comprenant :
a. un tambour de construction de ceinture (1),
b. un premier moyen de transport (5) agencé en amont du tambour de construction de ceinture (1) dans la direction de transport (6), pour l'enroulement d'une bande de construction de ceinture (4) sur un tambour de construction de ceinture (1), et
c. des moyens pour le décalage du premier moyen de transport (5) dans une première direction de décalage (18, 20) différente de la direction de transport (6) du premier moyen de transport (5),
**caractérisé en ce que**
lesdits moyens sont conçus pour décaler le premier moyen de transport (5) dans une première direction de décalage (18, 20) différente de la direction de transport (6) du premier moyen de transport (5), de telle sorte qu'une bande de construction de ceinture (4) acheminée sur le moyen de transport (5) peut être alignée sur le tambour de construction de ceinture (1) pendant l'enroulement sur le tambour de construction de ceinture (1).

10. Dispositif selon la revendication 9, dans lequel le dispositif comprend au moins un premier et un deuxième tambour de construction de ceinture, et le premier ou deuxième tambour de construction de ceinture ne peut pas être décalé parallèlement à l'axe de rotation du premier ou deuxième tambour de construction de ceinture.
